Europäisches Patentamt

European Patent Office

Office européen des brevets

(19)

(11) EP 0 530 107 B1

(12) **FASCICULE DE BREVET EUROPEEN**

(45) Date de publication et mention
de la délivrance du brevet:
**20.11.1996 Bulletin 1996/47**

(51) Int Cl.6: **H04L 27/22**

(21) Numéro de dépôt: **92402357.5**

(22) Date de dépôt: **27.08.1992**

(54) **Démodulation PSK avec correction en bande de base d'erreurs de phase ou de fréquence**

PSK-Demodulator mit Korrektur im Basisband für Phasen- oder Frequenzfehler

PSK demodulator with baseband correction for phase or frequency errors

(84) Etats contractants désignés:
**DE GB IT**

(30) Priorité: **30.08.1991 FR 9110760**

(43) Date de publication de la demande:
**03.03.1993 Bulletin 1993/09**

(73) Titulaire: **FRANCE TELECOM**
**F-75015 Paris (FR)**

(72) Inventeurs:
• **Vandamme, Patrick**
**F-22700 Perros Guirec (FR)**
• **Kervarec, Joelle**
**F-22760 Pleumeur Bodou (FR)**
• **Leclert, Alain**
**F-22300 Ploulec'h (FR)**

(74) Mandataire: **Martinet & Lapoux**
**BP 405**
**78055 St. Quentin en Yvelines Cédex (FR)**

(56) Documents cités:
**EP-A- 0 071 514          EP-A- 0 208 284**
**FR-A- 2 552 959          US-A- 3 727 134**
**US-A- 4 968 955**

## Description

La présente invention concerne un dispositif de démodulation cohérente et plus particulièrement des moyens pour récupérer une onde porteuse dans le signal modulé que reçoit le dispositif de démodulation.

Le dispositif de démodulation est inclus dans un récepteur d'un système de transmission numérique par exemple pour des communications numériques entre relais hertziens et/ou par satellite.

Dans un émetteur d'un système de transmission, un signal numérique de données module une porteuse radioélectrique. La modulation employée peut être une modulation multiphase ou une modulation multiamplitude. La modulation multiphase est une modulation de phase à N états ou symboles, où N est un entier égal à une puissance de 2; par exemple lorsque N est égal à 4, 8 ou 16, la modulation de phase est désignée par l'abréviation MDP4, MDP8, ou MDP16. La modulation multiamplitude est connue sous le sigle MAQ signifiant "modulation d'amplitude en quadrature" et combine deux porteuses en quadrature modulées respectivement, par exemple à 2, 4 ou 8 états ou niveaux d'amplitude; une modulation multiamplitude offre ainsi par exemple 4, 16, ou 64 états ou symboles correspondant aux sigles MAQ4, MAQ16 ou MAQ64.

Ainsi quelle que soit la modulation utilisée, celle-ci fait appel à une modulation par deux signaux composants, issus du signal numérique à moduler, modulant deux ondes en quadrature de phase issues de la même onde porteuse. La fréquence porteuse est supérieure à la fréquence d'émission des symboles, également appelée fréquence d'horloge $1/T$, T étant la période d'horloge. Le signal numérique modulé est généralement transposé à la fréquence d'émission dans l'émetteur du système de transmission. Dans le récepteur, des moyens de transposition de fréquence et de préamplification reçoivent le signal émis et appliquent le signal modulé multisymbole en fréquence intermédiaire au dispositif de démodulation.

Les deux paramètres nécessaires pour restituer le signal numérique transmis par un émetteur sont la phase et la fréquence de l'onde porteuse.

Les circuits de récupération de porteuse connus utilisent des techniques d'asservissement de phase. Ces circuits sont réalisés sous la forme d'une boucle analogique à verrouillage de phase (PLL) incluant un comparateur de phase, un filtre et un oscillateur commandé en tension. Les inconvénients liés à de telles réalisations sont nombreux. Sur le plan des performances, la compensation d'un écart de fréquence entre la fréquence d'onde porteuse de démodulation fournie par l'oscillateur commandé en tension et la fréquence de l'onde porteuse de modulation dans l'émetteur ne se fait qu'en contrepartie d'une erreur de phase proportionnelle à l'écart de fréquence entre les ondes porteuses et inversement proportionnel au gain de boucle. L'erreur de phase ayant des conséquences non négligeables sur les performances du système de transmission, elle doit être limitée à de faibles valeurs, typiquement quelques dixièmes de dégré, ce qui impose d'augmenter le gain de boucle. On ne peut cependant pas pour des raisons de stabilité de la boucle augmenter arbitrairement ce gain.

Une autre conséquence induite par cette erreur de phase est la limitation de la plage fréquentielle d'acquisition à des valeurs de fréquence compatibles avec une erreur de phase statique admissible.

Sur le plan de la mise en oeuvre d'une telle boucle de phase, des règlages astreignants sont nécessaires afin d'obtenir les performances souhaitées. Par ailleurs une modification d'un des paramètres de boucle ou des paramètres du système de transmission, tels que rapidité de modulation, requiert une redéfinition complète de l'ensemble de la boucle.

Le brevet américain US-A-4 968 955 a trait à un démodulateur cohérent à circuit analogique d'asservissement de phase ou boucle de phase à VCO analogique conventionnel. Comparativement aux démodulateurs de type classique, une boucle de phase par voie de réception est utilisée. L'objectif visé par l'utilisation de ces deux boucles de phase est le suivant : par sélection d'une des deux boucles de phase, l'erreur de phase est constituée soit d'un premier signal d'erreur, bien adapté à des erreurs de phase faibles, soit d'un second signal d'erreur obtenu suite à un traitement préalable qui ramène tous les points de la constellation relative à la modulation choisie (ex. : MAQ 256) autour de l'axe des abscisses positives dans un repère de Fresnel. Ce traitement consiste en un déphasage de $(90 \times N - 45)°$, N étant le numéro du cadran concerné.

La demande de brevet européen EP-A-0 208 284 a trait à une technique de récupération de porteuse appliquée aux modulations MAQ, qui s'affranchit de l'ambiguïté de phase et évite les démodulations croisée et inverse. Le démodulateur cohérent selon la EP-A-0 208 284 comprend de manière bien connue un circuit d'asservissement de phase avec un oscillateur commandé en tension. Le démodulateur comprend en outre un premier convertisseur analogique-numérique dans la voie de démodulation en phase et un second convertisseur analogique-numérique dans la voie de démodulation en quadrature. Un circuit logique produit un signal d'erreur en fonction de signaux sortant des convertisseurs. Un circuit de commande de phase déphase le signal d'horloge du second convertisseur analogique-numérique par rapport au signal d'horloge du premier convertisseur analogique-numérique afin de discriminer les deux voies de démodulation et de lever l'ambiguïté de phase.

L'invention vise à rémédier aux inconvénients des boucles de phase analogiques connues en fournissant des moyens de récupération d'onde porteuse qui sont conçus entièrement sous la forme de circuits numériques. Dans ces conditions, les moyens de récupération sont plus aisément intégrables d'une part, et présentent des caractéristiques de fonctionnement indépendantes de la rapidité de modulation du signal reçu d'autre part.

A cette fin, un dispositif de démodulation cohérente recevant un signal modulé obtenu par modulation multisymbole de deux ondes porteuses de modulation en quadrature, ledit dispositif comprenant des moyens de démodulation fournissant au moyen d'un oscillateur local des ondes porteuses de démodulation en quadrature pour démoduler le signal modulé en deux signaux composants analogiques démodulés,

des moyens d'échantillonnage fonctionnant à fréquence d'horloge des symboles du signal mcdulé pour convertir les deux signaux composants analogiques démodulés en deux signaux numériques entrants,

des moyens numériques de déphasage pour déphaser les signaux entrants par une phase de démodulation numérique en deux signaux numériques sortants, et

des moyens numériques de comparaison généralisée recevant les deux signaux numériques sortants pour produire des impulsions de signal d'erreur transmises, caractérisé en ce que ledit oscillateur local produit des ondes porteuses de démodulation ayant une fréquence libre appartenant à une plage d'incertitude fréquentielle des ondes porteuses de modulation et en ce que ledit dispositif de démodulation comprend

des moyens de traitement numérique pour calculer la phase de démodulation numérique en fonction des impulsions de signal d'erreur afin de compenser a posteriori les différences de phase et de fréquence entre les ondes porteuses de modulation et les ondes porteuses de démodulation par déphasage des signaux entrants.

Le dispositif de démodulation ne comprend que, en tant que circuits analogiques, les moyens de démodulation à mélangeurs et oscillateur démodulant le signal modulé reçu par deux ondes porteuses de démodulation en quadrature. L'oscillateur dans les moyens de démodulation est un oscillateur libre, et non plus un oscillateur commandé en tension. Ceci facilite l'intégration du dispositif et permet d'obtenir de meilleures caractéristiques.

La boucle de phase essentiellement réalisée par les moyens de déphasage, les moyens de comparaison généralisée et les moyens de traitement est entièrement numérique. Cette boucle de phase fonctionnant à la fréquence de modulation, celle-ci peut être utilisée pour des fréquences d'horloge de plusieurs dizaines de MHz avec des technologies conventionnelles.

Selon une caractéristique de l'invention, les moyens numériques de comparaison généralisée distinguent le régime de poursuite de phase (ou "maintien de fréquence") au cours duquel une comparaison de phase entre ondes porteuses de modulation et ondes porteuses de démodulation est effectuée, et le régime d'acquisition de fréquence au cours duquel une comparaison de fréquence entre les ondes porteuses est effectuée. En particulier, les moyens de comparaison généralisée comprennent des moyens numériques de comparaison de phase pour produire, à la fréquence d'horloge, des premières et secondes impulsions de signal d'erreur respectivement en réponse à des différences de phase négatives et positives entre les ondes porteuses de démodulation et les ondes porteuses de modulation, des moyens numériques de comparaison de fréquence pour produire, à la fréquence d'horloge, des troisièmes et quatrièmes impulsions de signal d'erreur respectivement en réponse à des différences de fréquence positives et négatives entre les ondes porteuses de démodulation et les ondes porteuses de modulation, et des moyens de détection d'état pour fournir une impulsion de détection en réponse à des amplitudes des signaux numériques sortants qui sont comprises dans des intervalles d'amplitude respectifs prédéterminés, pendant chaque période d'horloge de symbole, afin de produire un signal de commande logique pour activer les moyens de comparaison de fréquence et désactiver les moyens de comparaison de phase lorsqu'un compte d'impulsions de détection cumulé pendant une période multiple de la période des symboles est supérieur à un premier seuil prédéterminé, et pour désactiver les moyens de comparaison de fréquence et activer les moyens de comparaison de phase lorsque ledit compte d'impulsions de détection cumulé pendant ladite période multiple est inférieur audit premier seuil.

Les moyens de détection d'état qui contribuent à distinguer les deux régimes comprennent de préférence un circuit pour produire une desdites impulsions de détection lorsque les amplitudes des signaux sortants sont comprises dans les intervalles prédéterminés respectifs pendant la période d'horloge, un compteur pour compter les impulsions de détection durant ladite période multiple, un comparateur pour comparer le compte d'impulsions de détection cumulé dans le compteur audit premier seuil prédéterminé afin de produire un signal logique de commande dont les deux états sont représentatifs respectivement de comptes d'impulsions de détection supérieur et inférieur audit premier seuil prédéterminé, et des moyens de commutation pour commuter des sorties d'impulsions de signal d'erreur des moyens de comparaison de phase et de fréquence à des entrées des moyens de traitement numérique en fonction des états du signal de commande.

Selon une autre caractéristique de l'invention, les moyens de traitement numérique comprennent un compteur-décompteur ayant un contenu incrémentable et décrémentable. Le contenu est incrémenté et décrémenté respectivement par les premières et secondes impulsions de signal d'erreur produites par les moyens de comparaison généralisé lorsque ledit compte d'impulsions de détection cumulé dans ledit compteur durant la période multiple est inférieur audit premier seuil. Le contenu du compteur-décompteur est également incrémenté et décrémenté respectivement par les troisièmes et quatrièmes impulsions de signal d'erreur produites par les moyens de comparaison généralisée lorsque ledit compte d'impulsions de détection cumulé dans ledit compteur durant ladite période multiple est supérieur audit premier seuil. Les moyens de traitement numérique comprennent également des moyens d'addition-soustraction pour respectivement additionner le contenu du compteur-décompteur à un premier paramètre prédéterminé en réponse à l'une desdites premières et troisièmes impulsions et pour soustraire le contenu du compteur-décompteur audit premier paramètre en réponse à l'une des secondes et quatrièmes impulsions, des moyens pour multiplier le résultat de l'opération effectuée par les moyens d'addition-soustraction par un second paramètre prédéterminé, et des moyens pour accumuler le produit fourni par les moyens pour multiplier à la fréquence d'horloge afin de produire une phase de démodulation.

Le compteur-décompteur effectue une première intégration de signal d'erreur d'une manière analogue à un filtre de boucle, et les moyens pour accumuler réalisent une seconde intégration de signal d'erreur, d'une manière analogue à un oscillateur commandé en tension. Cette double intégration permet d'obtenir une erreur statique de phase nulle, quel que soit l'écart de fréquence à compenser entre les ondes porteuses de modulation et de démodulation.

Le dispositif de démodulation peut également comprendre des moyens pour sauvegarder périodiquement le contenu du compteur-décompteur lorsque ledit compte d'impulsions de détection cumulé dans ledit compteur durant la période multiple est inférieur audit premier seuil, et pour introduire le contenu sauvegardé dans le compteur-décompteur lorsque ledit compte d'impulsions de détection cumulé durant la période multiple dans ledit compteur est supérieur audit premier seuil.

Les moyens pour sauvegarder contribuent à obtenir une plage d'acquisition en fréquence voisine de la plage théorique maximale, avec des périodes d'acquisition très courtes.

D'autres avantages et caractéristiques de la présente invention apparaîtront plus clairement à la lecture de la description suivante de plusieurs réalisations de cette invention, en référence aux dessins annexés correspondant dans lesquels :

- la Fig.1A est un bloc-diagramme d'un dispositif de démodulation cohérente selon la technique antérieure;
- la Fig.1B est un diagramme de Fresnel pour illustrer le principe de la démodulation cohérente;
- la Fig.2 est un bloc-diagramme d'un dispositif numérique de démodulation cohérente selon l'invention;
- la Fig.3 est un diagramme de réponse impulsionnelle pour une mise sous forme discrète de l'équation de fonctionnement d'une boucle de phase;
- la Fig.4 est un diagramme de Fresnel pour exposer le principe de démodulation numérique selon l'invention;
- la Fig.5 est un bloc-diagramme d'un déphaseur numérique inclus dans le dispositif de démodulation cohérente selon l'invention;
- la Fig.6 est un bloc-diagramme d'un circuit de comparaison de phase généralisée inclus dans le dispositif de démodulation cohérente selon l'invention;
- les Figs.7, 8 et 9 sont des bloc-diagrammes respectivement d'un comparateur de phase, d'un comparateur de fréquence et d'un détecteur d'état inclus dans le circuit de comparaison de phase généralisée;
- la Fig.10 est un diagramme de Fresnel représentant une constellation d'une modulation MAQ 16 pour exposer le principe de fonctionnement du détecteur d'état;
- la Fig.11 est un bloc-diagramme d'un circuit de traitement numérique de boucle de phase inclus dans le dispositif de démodulation cohérente selon l'invention; et
- la Fig.12 est un diagramme de Fresnel pour exposer le principe de fonctionnement du circuit de traitement numérique de boucle de phase.

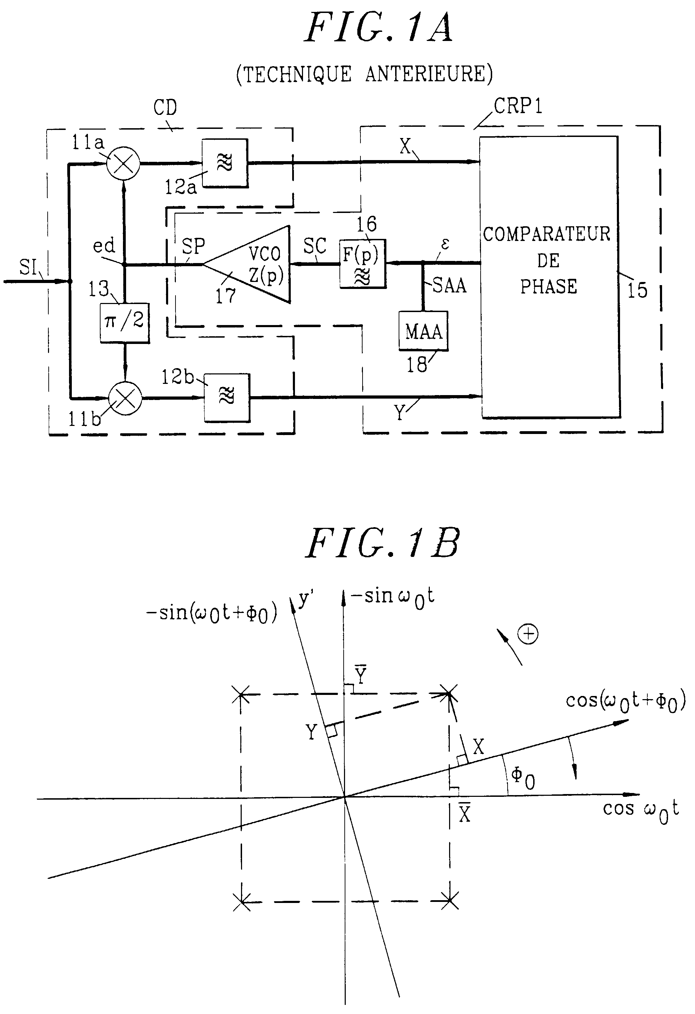

En référence à la Fig.1A, un dispositif de démodulation cohérente inclus dans un récepteur d'un système de transmission numérique selon la technique antérieure comprend un circuit de démodulation CD et un circuit de récupération de porteuse CRP1. Le dispositif de démodulation cohérente reçoit un signal modulé SI à onde porteuse de modulation transmis par un émetteur d'un système de transmission numérique.

Le circuit de démodulation CD comprend deux mélangeurs 11a et 11b faisant office de démodulateurs, deux filtres passe-bas 12a et 12b, et un déphaseur de ($\pi/2$) 13. Le circuit de récupération de porteuse CRP1 comprend un comparateur de phase 15, un filtre passe-bas de boucle 16 et un oscillateur commandé en tension (VCO) 17, et peut inclure selon certaines réalisations connues de l'homme du métier un moyen d'aide à l'acquisition de fréquence (MAA) 18 relié à l'entrée du filtre de boucle 16.

Deux premières entrées respectives des mélangeurs 11a et 11b reçoivent le signal modulé SI. Un signal de porteuse récupérée SP est appliqué à deux secondes entrées des mélangeurs 11a et 11b respectivement directement et à travers le déphaseur de ($\pi/2$) 13. Des sorties respectives des mélangeurs sont reliées à des entrées du comparateur 15 à travers les filtres 12a et 12b. Les filtres 12a et 12b rejettent les harmoniques au voisinage de la fréquence double de la fréquence porteuse dans les signaux démodulés délivrés par les mélangeurs. Le comparateur de phase 15 produit un signal d'erreur $\varepsilon$ représentatif de l'erreur de phase instantanée entre le signal de porteuse de modulation récupérée SP et l'onde porteuse de modulation émise à estimer. L'oscillateur 17 produit le signal de porteuse récupérée SP asservi à la fréquence et à la phase de l'onde porteuse de modulation en réponse au signal d'erreur ε généré à la sortie du comparateur de phase 15 et appliqué à une entrée de commande de l'oscillateur 17 à travers le filtre de boucle 16.

Le rôle du filtre de boucle 16 consiste en la limitation de l'influence du bruit sur le signal d'erreur ε et en la réjection des composantes hautes fréquences afin d'asservir convenablement l'oscillateur 17.

Les signaux X et Y en bande de base issus des filtres respectifs 12a et 12b correspondent aux deux signaux composants modulant les deux ondes porteuses en quadrature dans l'émetteur. Ces deux signaux sont appliqués à un régénérateur, non représenté, qui, d'une part, discrimine les états dans les signaux démodulés, et d'autre part, compare les états à des seuils pour décoder les symboles, afin de reconstituer l'information numérique initialement émise. Les instants d'échantillonnage dans le régénérateur sont établis par un circuit de régénération d'horloge par exemple à partir des signaux en bande de base X et Y.

La Fig.1B montre à titre d'exemple, sous la forme d'un diagramme de Fresnel, une modulation de phase à quatre états (MDP4). Les quatre croix de symbole montrées sur le diagramme sont les lieux géométriques d'un vecteur $\overline{OM}$ associé au signal modulé. La démodulation consiste à "projeter" le signal modulé SI sur les deux ondes porteuses de démodulation et pour cela, il faut préalablement récupérer la phase de l'une des ondes porteuses. Ceci est réalisé par le comparateur 15 qui produit le signal d'erreur ε pour asservir la phase $\phi_O$ du signal de porteuse récupérée $SP = \cos(\omega_O t + \phi_O)$ appliqué aux deux secondes entrées des mélangeurs respectivement directement et à travers le déphaseur 13, à la phase de l'onde porteuse à estimer et à récupérer, ici $\cos \omega_O t$. Le signal d'erreur ε représentatif du déphasage $\phi_O$ est établi à partir des composantes en bande de base (X,Y) du signal démodulé et de composantes $(\overline{X}, \overline{Y})$ d'un signal reconstruit précisément à partir des composantes du signal démodulé.

Le comparateur de phase 15 est remplacé dans certaines réalisations par un comparateur de phase/ fréquence pour obtenir d'abord la fréquence porteuse, notamment lorsque celle-ci varie dans une large plage, puis la phase de l'onde porteuse. Néanmoins, dans le cas où seul le comparateur de phase 15 est utilisé, le moyen d'aide à l'acquisition 18 est alors mis en oeuvre pour l'acquisition en fréquence. Le moyen 18 produit un signal SAA qui balaye la fréquence nominale de l'oscillateur asservi 17 dans la plage d'incertitude fréquentielle des ondes porteuses en quadrature transmises dans le signal reçu. Le signal SAA est inhibé dès que l'acquisition en fréquence a lieu. Le dispositif 18 permet notamment d'augmenter considérablement la plage fréquentielle d'acquisition.

Les inconvénients d'un tel circuit selon la technique antérieure présentés ci-dessus ont été énumérés dans le préambule de la description. Nous présentons maintenant le dispositif de démodulation cohérente selon l'invention pour signaux modulés numériquement, incluant un circuit numérique de récupération de porteuse.

En référence à la Fig.1A, le signal d'erreur ε fourni par le comparateur 15 est appliqué à l'entrée de démodulation ed à travers le filtre 16 et l'oscillateur commandé en tension 17 en série. Le filtre 16 présente une impédance modélisée s'écrivant sous forme de transformée de Laplace :

$$F(p) = (1 + \tau_2 p)/\tau_1 p.$$

$\tau_1$ et $\tau_2$ sont des constantes déduites des caractéristiques du filtre 16.

De même l'oscillateur commandé en tension 17 présente une impédance modélisée s'écrivant sous forme de transformée de Laplace :

$$Z(p) = K_O/p,$$

où $K_0$ est le gain de l'oscillateur 17.

Le signal de porteuse récupérée SP présente donc une phase $\phi$ pour démoduler le signal reçu SI s'écrivant sous forme de transformée de Laplace :

$$\phi(p) = (K_O/p).[(1 + \tau_2 p)/(\tau_1 p)].\varepsilon(p),$$

soit:

$$\phi(p) = [K_O.\tau_2/(\tau_1.p) + K_O/(\tau_1.p^2)].\varepsilon(p) \qquad (1)$$

Le fondement mathématique de la présente invention réside dans l'utilisation de l'équation (1) ci-dessus sous forme discrète. Il est ainsi possible de réaliser une boucle de phase "numérique" pour circuit de récupération de porteuse conçue à partir de composants électroniques numériques et non analogiques tels que filtre et oscillateur commandé en tension.

L'équation sous forme discrète déduite de l'équation (1) s'écrit:

$$\phi_{m+1} = \phi_m + K_0 T(T/\tau_1)((\tau_2/T).\varepsilon_m + W_m) \qquad (2a)$$

*avec*

$$W_m = W_{m-1} + \varepsilon_{m-1}$$

T désigne la période d'échantillonnage ou période d'horloge correspondant à la période des symboles des signaux démodulés, $\phi_m$ désigne la phase de démodulation à un instant d'échantillonage t=mT, et $W_m$ est une variable intermédiaire.

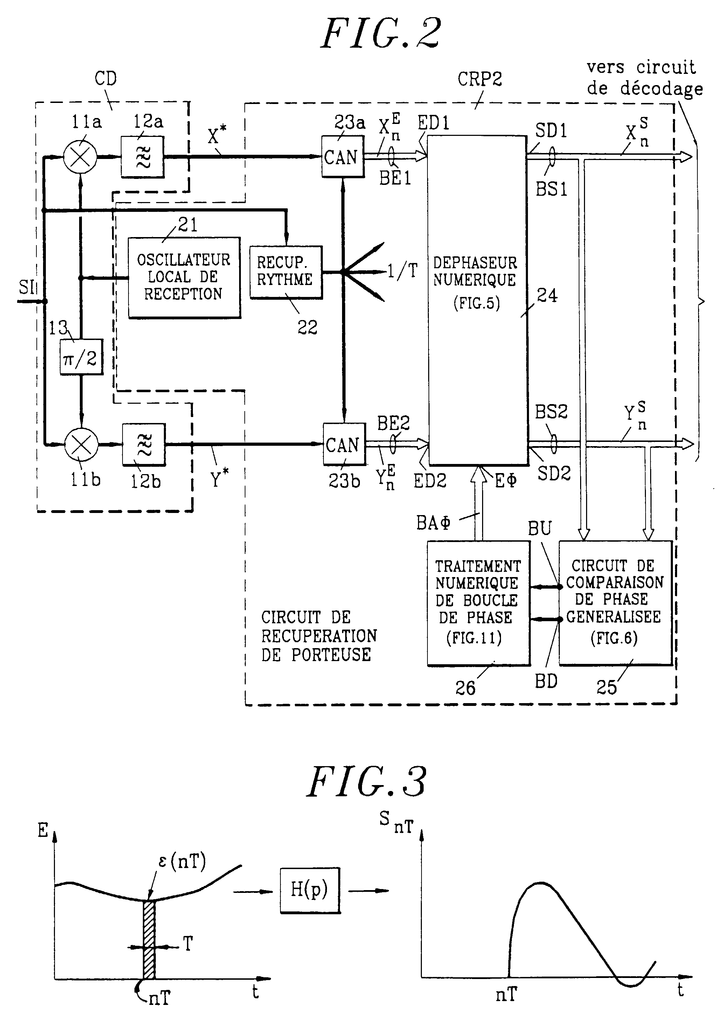

La représentation par réponse impulsionnelle montrée à la Fig.3 permet de mieux appréhender la mise sous forme discrète de l'équation (1). A une impulsion $\varepsilon(nT)$ à l'entrée d'un système de transmittance H(p) est associée une réponse $s_{nt}$. Ainsi à chaque instant t = nT, le signal $s_{nt}(t)$ issu du système en réponse au signal $\varepsilon(t)$ est approchée par la somme des réponses partielles relatives aux n impulsions appliquées entre t=0 et t = nT soit :

$$S_{nt}(t) \;=\; \sum_{k=0}^{n} T.\epsilon(kT).H(t-kT)$$

où H(t) est la réponse du système à l'impulsion de Dirac.

La mise sous forme discrète de l'équation (1) se déduit par exemple du résultat précité.

Les termes $K_O T(T/\tau_1)$ et $(\tau_2/T)$ dans l'équation (2a) peuvent s'écrire:

$$K_0 T(T/\tau_1) = \frac{1}{K_\xi} . \frac{4\xi^2 (B_L.T)^2}{(\xi^2 + 1/4)^2}$$

$$\frac{\tau_2}{T} = \frac{\xi^2 + 1/4}{B_L.T}$$

en utilisant les relations donnant les paramètres caractéristiques d'une boucle à verrouillage de phase :

$$\omega_\alpha = (K_0 K_n/\tau_1)^{1/2}$$

$$\xi = (\tau_2/2).\omega_n$$

$$B_L = W_n (\xi + 1/4)/(2\xi)$$

où $\omega_n$ et $K_O$ désignent respectivement la fréquence naturelle et le gain de l'oscillateur 17, $K_d$ le gain du comparateur 15 de la boucle, et $\xi$ le facteur d'amortissement de la boucle et $B_L$ sa largeur de bande de bruit. Ces relations sont par exemple divulguées dans le livre de GARDNER,- intitulé "Phaselock Techniques", John Wiley & Sons, Inc., (1966), New-York, particulièrement pages 8 à 22.

Ainsi l'équation (2a) s'écrit sous la forme :

$$\phi_{m+1} = \phi_m + \frac{1}{K_\alpha} \cdot \frac{4\xi^2(B_L \cdot T)^2}{(\xi^2+1/4)^2} \cdot \left( \frac{\xi^2+1/4}{B_L \cdot T} \cdot \epsilon_m + W_m \right)$$

avec

$$W_m = W_{m-1} + \epsilon_{m-1}$$

En posant :

$$ADD = \frac{\xi^2+1/4}{B_L \cdot T} \qquad et \qquad MUL = \frac{1}{K_\alpha} \cdot \frac{4\xi^2(B_L \cdot T)^2}{(\xi^2+1/4)^2} \; ,$$

l'équation 2(a) s'écrit :

$$\phi_{m+1} = \phi_m + MUL \; (ADD.\epsilon_m + W_m) \tag{2b}$$

En référence à la Fig.2, un dispositif de démodulation cohérente selon l'invention comprend le circuit de démodulation CD et un circuit de récupération de porteuse CRP2.

Le circuit de démodulation CD comprend les deux mélangeurs 11a et 11b, les deux filtres 12a et 12b et le déphaseur de ($\pi/2$) 13 qui sont agencés de la même manière que dans la Fig.1. Le signal modulé à fréquence intermédiaire SI est appliqué aux deux premières entrées respectives des deux mélangeurs. On notera qu'un signal modulé ayant une porteuse avec une fréquence nominale égale à la fréquence d'émission peut également être appliqué aux premières entrées des mélangeurs lorsque le signal reçu n'est pas transposé préalablement à une fréquence intermédaire.

Le circuit de récupération de porteuse CRP2 comprend un oscillateur local de réception 21, un circuit de récupération de rythme 22, deux convertisseurs analogiques-numériques 23a et 23b, un déphaseur numérique 24, un circuit de comparaison de phase généralisée 25 et un circuit de traitement numérique de boucle de phase 26.

L'oscillateur local remplace l'oscillateur 17 de la Fig.1 et a ainsi une sortie qui est reliée aux secondes entrées des mélangeurs 11a et 11b, directement et à travers le déphaseur 13. L'oscillateur local 21 produit un signal sinusoïdal dont la fréquence appartient à une plage d'incertitude fréquentielle des ondes porteuses d'émission en quadrature. Le circuit de récupération de rythme 22 reçoit le signal modulé SI et produit un signal d'échantillonnage à une fréquence 1/T égale à la fréquence d'émission des symboles modulants. Le signal d'échantillonnage est appliqué à des entrées d'horloge d'échantillonnage des convertisseurs analogiques-numériques 23a et 23b.

Les convertisseurs analogiques-numériques 23a et 23b numérisent deux signaux intermédiaires X* et Y* issus des filtres 12a et 12b du circuit de démodulation CD à la fréquence d'échantillonnage 1/T fournie par le circuit de récupération de rythme 22. Les deux convertisseurs analogiques-numériques fournissent des signaux numérisés à des entrées parallèles de données ED1 et ED2 du déphaseur numérique 24 par deux bus d'entrée BE1 et BE2. Les signaux numérisés supportent des couples de signaux d'échantillon entrants, tels que $X_n^E$ et $Y_n^E$, résultant de l'échantillonnage des signaux intermédiaires analogiques X* et Y* à un instant t=nT.

Le déphaseur numérique 24, le circuit de comparaison de phase généralisée 25 et le circuit de traitement numérique de boucle de phase 26 constituent une boucle de phase "numérique". Des sorties parallèles de données SD1 et SD2 du déphaseur numérique 24 sont reliées à des entrées du circuit de comparaison 25 par deux bus de sortie respectifs BS1 et BS2. Deux bornes de sortie BU et BD du circuit de comparaison 25 sont reliées à deux entrées du circuit de traitement numérique 26 dont la sortie se présente sous la forme d'un bus d'adresse BA$\phi$ connecté à des entrées de déphasage E$\phi$ du déphaseur numérique 24.

Le fonctionnement général du dispositif selon l'invention montré à la Fig.2 est maintenant présenté, avant d'expliciter le fonctionnement détaillé des circuits inclus dans le circuit de récupération de porteuse CRP2.

L'oscillateur local de réception 21, dont la précision en fréquence est de préférence assurée par un quartz, fournit, comme déjà signalé, un signal sinusoïdal à une fréquence appartenant à la plage d'incertitude fréquentielle des ondes porteuses d'émission en quadrature. Le signal reçu SI s'écrit sous la forme :

$$SI = ai \cos(\omega_0 t) - bi \sin(\omega_0 t)$$

où (ai,bi) désigne une suite de symboles dépendant de la modulation multisymbole retenue, et (cos($\omega_0$t), sin($\omega_0$t) désigne le couple des ondes porteuses en quadrature.

Aux sorties des filtres 12a et 12b, les signaux intermédiaires X* et Y* s'écrivent, à une erreur de phase près, sous la forme :

$$X^* = ai.\cos(2\pi.\Delta f.t)$$

et

$$Y^* = bi.\sin(2\pi.\Delta f.t),$$

$\Delta f$ est l'écart de fréquence entre la fréquence générée par l'oscillateur local 21 et la fréquence des porteuses de modulation.

Les signaux intermédiaires X* et Y* sont alors échantillonnés à la fréquence d'émission des symboles d'échantillonnage 1/T pour établir les signaux $X_n^E$ et $Y_n^E$ respectivement en sortie des deux convertisseurs 23a et 23b.

Les signaux numériques $X_n^E$ et $Y_n^E$ aux sorties des convertisseurs sont déphasés dans le déphaseur numérique 24 avec une phase de démodulation $\phi_n$ établie par le circuit de traitement numérique de boucle de phase 26 en fonction de signaux discrets appliqués par des bornes de sortie BU et BD du circuit de comparaison de phase généralisée 25.

Intuitivement, en se reportant à la Fig.4 et en désignant par (cos($\omega_0$ + 2$\pi$.$\Delta$f)t, sin($\omega_0$ + 2$\pi$.$\Delta$f)t) les deux signaux de démodulation appliqués aux deux secondes entrées des mélangeurs 11a et 11b, les deux ondes porteuses de modulation (cos $\omega_o$t;sin $\omega_o$t) sont déduites des deux signaux de démodulation appliqués aux deux secondes entrées par une rotation de $\phi_n = 2\pi\Delta f.nT$ à chaque instant d'échantillonnage t=nT. Le rôle du déphaseur 24, du circuit 25 et du circuit de traitement 26 est précisément d'établir à chaque instant d'échantillonnage t = nT le déphasage $\phi_n$ afin de mettre en phase a posteriori les signaux de démodulation relativement aux porteuses de modulation pour restituer les valeurs des symboles transmis aux sorties SD1 et SD2 du déphaseur numérique 24.

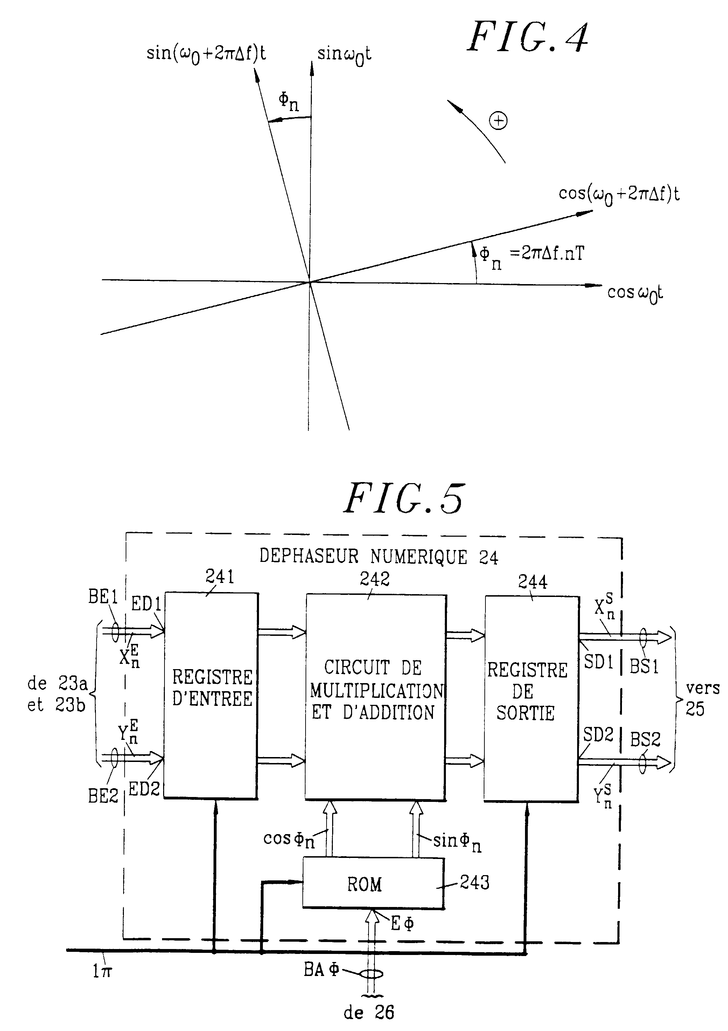

En référence à la Fig.5, le déphaseur numérique 24 comprend un registre d'entrée 241, un circuit de multiplication et d'addition 242, une mémoire morte ROM 243 et un registre de sortie 244. Les registres d'entrée 241 et de sortie 244 constituent des mémoires tampon pour respectivement stocker temporairement à la fréquence d'échantillonnage ou d'horloge 1/T les données reçues des deux convertisseurs analogiques-numériques 23a et 23b et les données sortant du circuit de récupération de porteuse vers le circuit de comparaison 25. Ainsi le registre d'entrée 241 mémorise les couples de signaux échantillonnés d'entrée $X_n^E$ et $Y_n^E$ à la fréquence 1/T, et le registre de sortie 244 mémorise les couples de signaux échantillonnés de sortie $X_n^S$ et $Y_n^S$ du signal démodulé.

Le rôle du déphaseur 24 est de déphaser d'un angle $\phi_n$ les signaux d'entrée $X_n^E$ et $Y_n^E$ pour établir les signaux de sortie $X_n^S$ et $Y_n^S$ démodulés. La Fig.4 schématise le fonctionnement du déphaseur. Les relations de rotation s'écrivent, à chaque instant t = nT, comme suit :

$$\begin{pmatrix} X_n^S \\ Y_n^S \end{pmatrix} = \begin{pmatrix} \cos\phi_n & -\sin\phi_n \\ \sin\phi_n & +\cos\phi_n \end{pmatrix} \begin{pmatrix} X_n^E \\ Y_n^E \end{pmatrix}.$$

Le circuit complexe 242 reçoit le couple ($X_n^E$, $Y_n^E$) du registre d'entrée 242, et fournit le couple ($X_n^S$, $Y_n^S$) au registre de sortie 244 via des bus internes au déphaseur 24. Le circuit 242 qui calcule le couple ($X_n^S$, $Y_n^S$) contient ainsi quatre multiplieurs, un additionneur et un soustracteur. Deux bus sortant de la mémoire ROM 243 appliquent le couple de fonctions trigonométriques (cos$\phi_n$, sin$\phi_n$) à des entrées du circuit 242. La mémoire ROM 243 contient sous une forme discrète les fonctions cos$\phi_n$ et sin$\phi_n$, avec $0 \leq \phi_n \leq 2\pi$. Pour lire le couple (cos$\phi_n$, sin$\phi_n$) dans une cellule de la mémoire, le circuit de traitement numérique de boucle de phase 26 fournit, à travers le bus BA$\phi$, une adresse de lecture afin de lire dans les deux bus de données la valeur représentative de l'angle de déphasage $\phi_n$ des signaux d'entrée $X_n^E$ et $Y_n^E$.

Les opérations de transfert, de calcul et de lecture dans les registres 241 et 244, le circuit 242 et la mémoire 243 sont cadencées à la fréquence d'échantillonnage 1/T générée par le circuit de récupération de rythme 22.

On notera que la programmation de la mémoire ROM 243 en harmonie avec le circuit de traitement numérique de boucle de phase 26, dépend essentiellement de la modulation retenue (MAQ4, MAQ16...) et de la stabilité de boucle souhaitée en fonction précisément de la modulation retenue. Les signaux numériques démodulés $Y_n^S$ et $X_n^S$ sortant du registre de sortie 244 sont appliqués à un circuit de décodage, non représenté, afin de reconstituer le signal numérique transmis, et également aux entrées du circuit de comparaison 25 pour établir la phase de démodulation $\phi_n$ à l'instant t = nT.

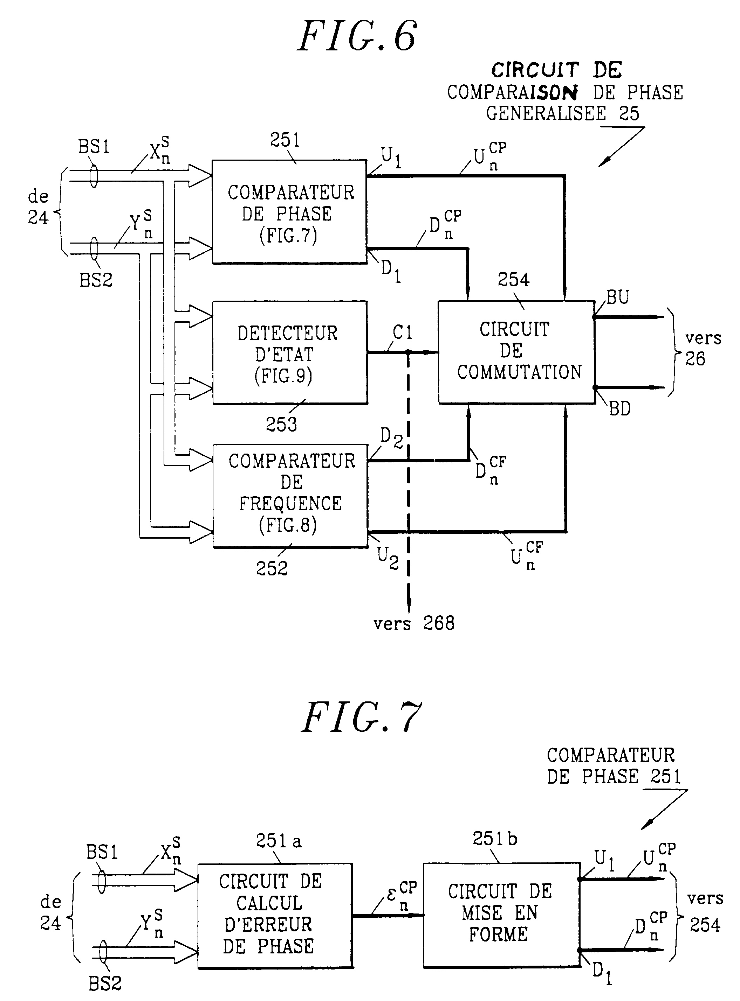

Le circuit de comparaison de phase généralisée 25, comme montré à la Fig.6, comprend un comparateur de phase 251, un comparateur de fréquence 252, un détecteur d'état 253 et un circuit de commutation 254. Les deux comparateurs 251 et 252 ainsi que le détecteur d'état 253 recoivent chacun à des entrées respectives les signaux de sortie démodulés $X_n^S$ et $Y_n^S$ à chaque instant t = nT. Deux sorties $U_1$ et $D_1$ du comparateur de phase 251 et deux sorties $U_2$ et $D_2$ du comparateur de fréquence 252 sont sélectionnées dans le circuit de commutation 254 par un signal de commande C1 établi par le détecteur d'état 253. Le signal de commande C1 est respectivement au niveau logique "1" pour relier les sorties $U_1$ et $D_1$ du comparateur de phase 251 aux bornes de sortie BU et BD du circuit de comparaison 25, et au niveau logique "0" pour relier les sorties $U_2$ et $D_2$ du comparateur de fréquence 252 aux bornes BU et BD. Le comparateur de phase 251 est sélectionné en régime de poursuite de phase, c'est-à-dire de maintien de fréquence, pour "recaler" la phase de démodulation $\phi_n$ sur la phase de modulation de la porteuse. Le comparateur de fréquence 252 est sélectionné en régime d'acquisition de fréquence pour "recaler" la fréquence de démodulation sur la fréquence porteuse de modulation, c'est-à-dire inhiber l'écart de fréquence $\Delta f$ existant entre la fréquence de l'oscillateur local de réception 21 et la fréquence porteuse de modulation. Les signaux aux sorties $U_1$, $D_1$, $U_2$ et $D_2$ des comparateurs 251 et 252, et le signal de commande de commutation C1 se présentent sous forme d'impulsions.

Les fonctionnements du comparateur de phase 251, du comparateur de fréquence 252 et du détecteur d'état 253 sont maintenant détaillés en référence aux Figs. 7, 8 et 9.

Comme montré à la Fig.7, le comparateur de phase 251 comprend un circuit de calcul d'erreur de phase 251a et un circuit de mise en forme 251b.

Le circuit de calcul d'erreur de phase 251a peut être analogue aux "moyens de traitement de signaux" analogiques illustrés dans la Fig.7 de la demande de brevet EP-A-71514. Selon cette demande de brevet, les moyens de traitement de signaux produisent pour les deux voies de démodulation, des signaux analogiques respectifs $(X - \overline{X})$ et $(Y - \overline{Y})$, où X et Y désignent les signaux démodulés délivrés par les mélangeurs, et $\overline{X}$ et $\overline{Y}$ désignent les deux signaux reconstruits à partir des signaux démodulés X et Y du signal démodulé notamment par discrimination par rapport à des seuils prédéterminés dépendant des symboles du type de modulation. Les moyens de traitement produisent un signal d'erreur $\varepsilon(\phi)$ de type ternaire afin de commander un oscillateur commandé en tension, tel que l'oscillateur 17 selon la technique antérieure :

$$\varepsilon(\phi) = \text{sgn}[\ \text{sgn}\ (X - \overline{X}).\text{sgn}(Y) - \text{sgn}(Y - \overline{Y}).\text{sgn}(X)],$$

où sgn désigne la fonction "signe".

Selon l'invention, le circuit de calcul d'erreur de phase 251a produit à chaque instant t = nT un signal d'échantillon d'erreur $\varepsilon_n^{CP}$, qui est analogue à un échantillon du signal $\varepsilon(\phi)$ et qui est également de type ternaire (+, -, 0) :

$$\varepsilon_n^{CP} = \text{sgn}[\ \text{sgn}(X_n^s - \overline{X}_n^s).\text{sgn}(Y_n^s) - \text{sgn}(Y_n^s - \overline{Y}_n^s).\text{sgn}(X_n^s)\ ]$$

où $\overline{X}_n^S$ et $\overline{Y}_n^S$ dénotent les signaux d'échantillon reconstruits.

Le signal $\varepsilon_n^{CP}$ issu du circuit 251a est appliqué à l'entrée du circuit de mise en forme 251b. Le circuit de mise en forme comprend deux comparateurs de seuil dont les sorties $U_1$ et $D_1$ délivrent les signaux $U_n^{CP}$ et $D_n^{CP}$ dont l'un présente à un instant t = nT une impulsion brève active à l'état "1", respectivement en réponse à des états ternaires "+" et "-" du signal d'erreur $\varepsilon_n^{CP}$. Aucun des signaux $U_n^{CP}$ et $D_n^{CP}$ ne comporte d'impulsion active lorsque le signal d'erreur $\varepsilon_n^{CP}$ est égal à zéro. Le rôle de cette mise en forme du signal d'erreur $\varepsilon_n^{CP}$ sera explicité ultérieurement lors de la description du circuit de traitement numérique de boucle de phase 26.

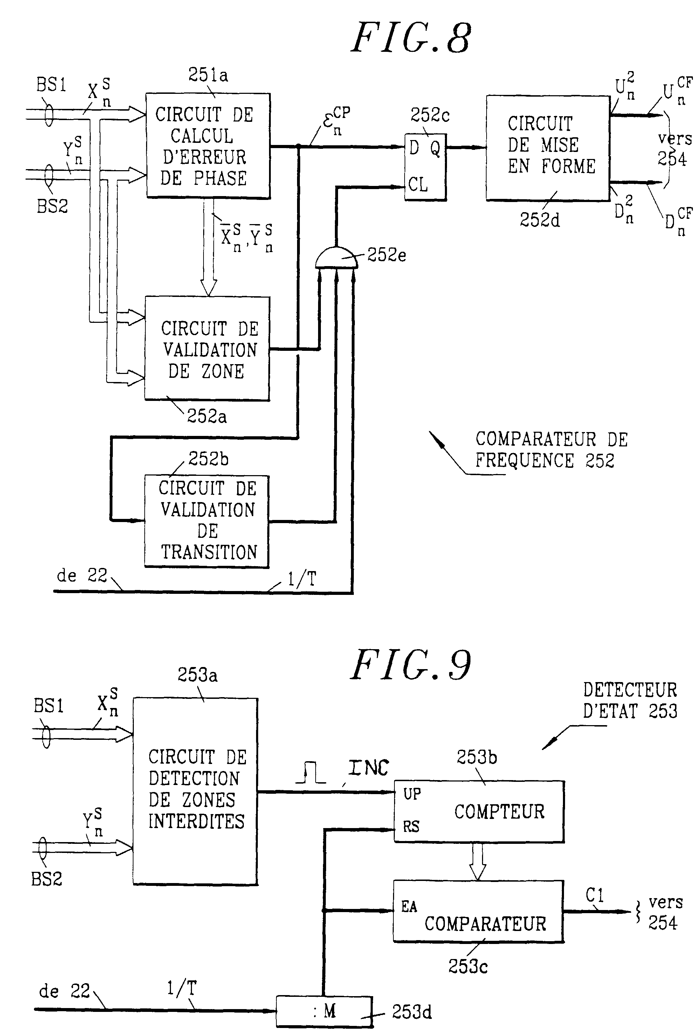

En référence à la Fig.8., le comparateur de fréquence 252 comprend le circuit de calcul d'erreur de phase 251a, un circuit de validation de zone 252a, un circuit de validation de transition 252b, une bascule D 252c, un circuit de mise en forme 252d et une porte ET à trois entrées 252e. Bien qu'illustré aux figures 7 et 8, le circuit 251a est en pratique commun aux deux comparateurs 251 et 252. Le circuit de mise en forme 252d est analogue au circuit 251b déjà présenté en référence à la Fig.7.

Le signal d'erreur ternaire $\varepsilon_n^{CP}$ produit par le circuit de calcul d'erreur de phase 251a est appliqué à l'entrée D de la bascule 252c et n'est validé en sortie Q de celle-ci que lorsque certaines conditions sont satisfaites. Pour cela, le circuit de validation de zone 252a recevant les signaux d'échantillon démodulé $X_n^S$ et $Y_n^S$ via les bus $BS_1$ et $BS_2$, le circuit de validation de transition 252b recevant le signal d'erreur $\varepsilon_n^{CP}$, et le circuit de récupération de rythme 22 ont des sorties reliées respectivement aux entrées de la porte ET 252d dont la sortie est reliée à l'entrée d'horloge CL de la bascule 252c.

Le principe de fonctionnement du comparateur de fréquence 252 est sensiblement analogue à celui de moyen de traitement de signaux démodulés décrit dans la demande de brevet FR-A-2552959, et consiste à inhiber l'impulsion d'horloge 1/T appliqué à la bascule 252c par le circuit de récupération de rythme 22, via la porte 252e, et donc à

EP 0 530 107 B1

maintenir l'état de la sortie Q de la bascule précédant l'impulsion d'horloge sous deux conditions. Ces deux conditions sont établies par le circuit de validation de zone 252a et le circuit de validation de transition 252b.

La sortie du circuit de validation de zone 252a est à l'état bas "0" et l'état de la sortie du circuit de calcul d'erreur de phase 251a n'est donc pas validé dans la bascule D 252c lorsque :

$$\left| X_n^s - \overline{X}_n^s \right| > R, \text{ et } \left| Y_n^s - \overline{Y}_n^s \right| > R$$

où R est un nombre réel prédéterminé. En pratique, ces relations signifient que les transitions du signal d'erreur ont une faible probabilité d'être significatives et qu'elles ne doivent pas être validées.

La sortie du circuit de validation de transition 252b n'est à l'état haut "1" que lorsque le signal d'erreur $\varepsilon_n^{CP}$ issu du circuit du calcul d'erreur de phase 251a transite d'un état bas "-" à un état haut "+" ou inversement. La différence de fréquence entre les ondes porteuses locales et les ondes porteuses de modulation est alors différente de zérc. Le circuit 252b permet en pratique, en se référant à la Fig.4, de maintenir la sortie de la bascule 252c à un état haut "+" lorsque la différence de la fréquence porteuse de démodulation ($\omega_o/2\pi + \Delta f$) et de la fréquence porteuse de modulation ($\omega_o/2\pi$) est positive, et à un état bas "-" lorsque la différence de la fréquence de démodulation et de la fréquence de modulation est négative.

Selon la FR-A-2552959, le comparateur de phase utilisé est un comparateur délivrant un signal d'erreur binaire. Le circuit de calcul d'erreur de phase 251a selon l'invention fournit un signal d'erreur $\varepsilon_n^{CP}$ de type ternaire. La seconde condition est une condition supplémentaire qui consiste à produire un niveau "0" à la sortie du circuit de validation de transition 252b pour des transitions du signal d'erreur $\varepsilon_n^{CP}$ à $\varepsilon_{n+1}^{CP}$ entre l'instant t = nT et l'instant t = (n + 1)T respectivement du niveau "+" ou "-" au niveau "0". Les plages d'acquisition en fréquence sont alors plus étendues.

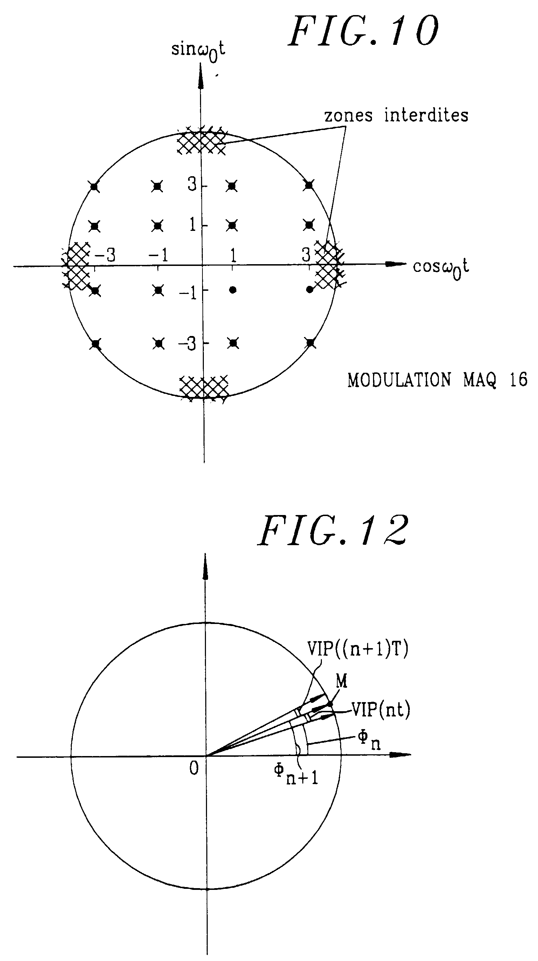

Le principe du détecteur d'état 253 dont le rôle est de commander le circuit de commutation 251 pour valider sélectivement soit les sorties du comparateur de phase 251, soit les sorties du comparateur de fréquence 252, est maintenant décrit en référence à la Fig.9. Le détecteur d'état 253 détecte les deux états de la boucle numérique de récupération d'onde porteuse : un premier état, dit "état accroché" correspond au régime de poursuite de phase (ou maintien de fréquence), au cours duquel le comparateur de phase 251 est sélectionné; un second état, dit "état décroché", correspond au régime d'acquisition de fréquence au cours duquel le comparateur de fréquence 252 est sélectionné. Cette détection est réalisée en analysant l'emplacement des composantes de signal d'échantillon démodulé $X_n^S$ et $Y_n^S$ que reçoit le détecteur d'état via les bus $BS_1$ et $BS_2$, dans le diagramme de Fresnel.

Dans la Fig.10 il est montré à titre d'exemple une représentation de Fresnel, également appelée "constellation", relative à une modulation MAQ16. Les croix "x" désignent les différents lieux géométriques d'un vecteur $\overline{OM}$ associés aux symboles du signal modulé SI. En se référant maintenant à la Fig.4, il a été vu que la première étape de démodulation selon la présente invention pour produire un signal intermédiaire (X*, Y*) consiste à "projeter" le signal modulé reçu sur les signaux cos $[(\omega_0 + 2\pi\Delta f)t]$, et sin $[(\omega_0 + 2\pi\Delta f)t]$ dont la fréquence diffère de $\Delta f$ par rapport à la fréquence de la porteuse de modulation ($\omega_O/2\pi$). En revenant à la Fig.10, pour un écart de fréquence $\Delta f$, les vecteurs représentant les signaux [cos ($\omega_0 + 2\pi\Delta f)t$, sin ($\omega_0 + 2\pi\Delta f)t$] se déphasent continuellement par rapport aux vecteurs axiaux représentant les signaux de modulation [cos $\omega_0 t$, sin $\omega_0 t$], et les "projections" réalisées pour obtenir les symboles transmis peuvent engendrer des couples de symboles n'existant pas dans la modulation MAQ16. Des "zones interdites" ne contenant pas de symboles ou états de signaux modulés sont définies judicieusement dans le diagramme de Fresnel. La position, la forme et la taille des zones interdites sont préprogrammées dans le circuit 253a et dépendent des caractéristiques de la modulation. Un exemple de zones interdites est indiqué par des zones hachurées situées sur les axes du diagramme dans la Fig.10.

En référence à la Fig.9, le détecteur d'état comprend un circuit de détection de zones interdites 253a, un compteur 253b, un comparateur numérique à seuil 253c et un diviseur de fréquence 253d. Le circuit de détection de zones interdites 253a reçoit sur deux entrées les deux composantes de signal démodulé $X_n^S$ et $Y_n^S$ et produit des impulsions d'incrémentation INC appliquées à une entrée d'incrémentation UP du compteur 253b lorsque lesdites composantes du signal démodulé appartiennent à des zones interdites. Cela traduit le fait que les amplitudes des composantes du signal démodulé ($X_n^S, Y_n^S$) appartiennent à des couples d'intervalles d'amplitude respectifs prédéterminés. Le diviseur de fréquence 253d reçoit le signal d'échantillonnage de période T issu du circuit de récupération de rythme 22 pour produire un signal de période MT. Ce signal de période MT est appliqué à une entrée de remise à zéro RS du compteur 253b et à une entrée d'activation EA du comparateur 253c. A la fin de chaque période MT, le compteur 253b applique le compte d'impulsions d'incrémentation à une entrée du comparateur 253c, puis est remis à zéro. Le comparateur 253c compare le compte d'impulsions d'incrémentation à un premier seuil prédéterminé à chaque fin de période MT. La sortie du comparateur 253c fournit le signal de commande C1 au circuit de commutation 254.

Lorsque le circuit de détection de zones interdites 253a détecte dans le signal démodulé ($X_n^S, Y_n^S$), des symboles appartenant aux zones interdites, une impulsion d'incrémentation INC présentant une transition à un niveau haut "1" incrémente d'une unité le compteur 253b. Cycliquement à la fréquence 1/(MT) définie par le diviseur de fréquence 253d, le compte du compteur 253b est comparé à un premier seuil numérique mémorisé dans le comparateur 253c. Si le compte du compteur est supérieur audit premier seuil numérique, le signal de commande C1 passe à l'état logique "1" pour relier les sorties $U_2$ et $D_2$ du comparateur de fréquence 252 aux bornes BU et BD à travers le circuit de commutation 254. Si le compte du compteur 253b est inférieur audit premier seuil numérique, le signal de commande C1 passe à l'état "0" pour relier les sorties $U_1$ et $D_1$ du comparateur de phase 251 aux bornes BU et BD à travers le circuit de commutation 254. En référence à la Fig.4, le fait que le compte du compteur 253c soit supérieur au premier seuil numérique prédéterminé traduit que l'écart de fréquence $\Delta f$ est trop élevé et qu'une étape d'acquisition doit être initialisée et donc que les sorties du comparateur de fréquence 252 doivent être validées.

Le rôle du circuit de traitement numérique 26 est de "simuler" une boucle de phase dont l'équation discrète de fonctionnement est l'équation (2b) déjà signalée. En d'autres termes, le circuit 26 filtre les caractéristiques de signal d'erreur aux bornes BU et BD du circuit de comparaison de phase généralisé 25 pour produire la phase de démodulation $\phi_n$ et ainsi jouer un rôle analogue au filtre de boucle 16 et à l'oscillateur VCO 17 selon la technique antérieure.

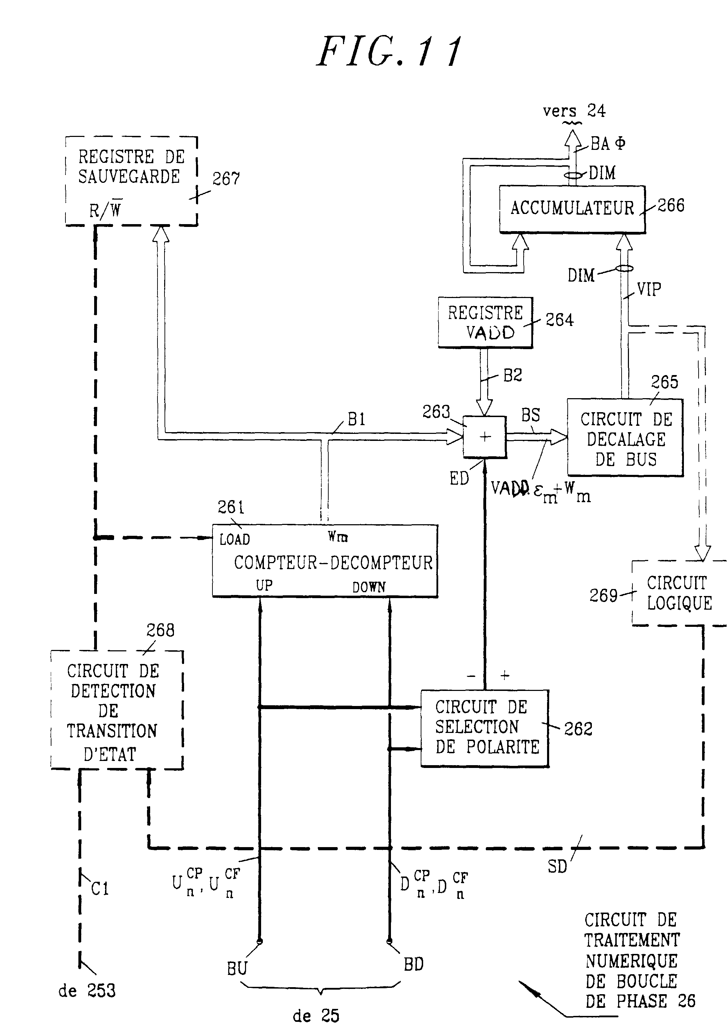

Selon la réalisation illustrée à la Fig.11, le circuit de traitement numérique 26 inclut un compteur-décompteur 261, un circuit de sélection de polarité 262, un additionneur numérique 263, un registre d'incrément 264, un circuit de décalage de bus 265, et un accumulateur 266. Les bornes de sortie BU et BD du circuit de commutation 254 appliquent à chaque instant t = nT, soit les signaux $U_n^{CP}$ et $D_n^{CP}$ issus du comparateur de phase 251, soit les signaux $U_n^{CF}$ et $D_n^{CF}$ issus du comparateur fréquence 252, respectivement à une entrée de commande de comptage UP et une entrée de commande de décomptage DOWN du compteur-décompteur 261. Des sorties de données du compteur-décompteur 261 et des premières entrées de l'additionneur 263 sont reliées par un bus bidirectionnel B1. Des secondes entrées de données de l'additionneur 263 sont reliées à des sorties du registre d'incrément 264 par un bus B2. L'additionneur 263 applique le résultat d'une addition ou soustraction au circuit de décalage de bus 265 via un bus de sortie BS. Des sorties du circuit de décalage de bus sont reliées à des premières entrées de l'accumulateur 266 dont les sorties constituent le bus d'adresse BA$\phi$ pour adresser la mémoire ROM 243 dans le déphaseur numérique 24 et sont rebouclées sur des secondes entrées de l'accumulateur.

De l'équation (2b), la phase de démodulation $\phi_{m+1}$, à l'instant t = (m + 1)T est déduite la phase de démodulation $\phi_m$ à l'instant t = mT additionnée à une valeur d'incrémentation de phase VIP donnée par l'égalité :

$$VIP = MUL\ (ADD.\varepsilon_m + W_m)$$

où $\varepsilon_m$ désigne le signal d'erreur à l'instant t = mT, et $W_m = W_{m-1} + \varepsilon_{m-1}$ est une variable intermédiaire.

Ainsi pour une valeur de variable intermédiaire $W_m$ donnée, à l'instant t = mT la valeur d'incrémentation de phase VIP est déduite par addition à cette valeur $W_m$ de la valeur ADD, -ADD ou "0" puisque le signal d'erreur $\varepsilon_m$ est égal à "1", "-1" ou "0", puis par multiplication de la valeur du résultat de l'opération précédente par MUL.

Les signaux issus du circuit de comparaison de phase généralisée 25 et appliqués respectivement à l'entrée de comptage UP et l'entrée de décomptage DOWN du compteur-décompteur 261 incrémentent et décrémentent le contenu du compteur-décompteur 261 afin que ce dernier soit égal à chaque instant d'échantillonnage à la variable intermédiaire $W_m$ conformément à l'équation ci-dessus dans laquelle $\varepsilon_{m-1}$ est un signal d'erreur dont les valeurs possibles appartiennent à l'ensemble {-1, 0, 1}. Le compteur-décompteur 261 réalise ainsi une première intégration du signal intermédiaire analogue à celle du filtre de boucle 16. L'addition ou la soustraction de la valeur ADD.$\varepsilon_m$ à cette valeur intermédiaire consiste à additionner ou soustraire la valeur ADD, ou bien à n'effectuer aucune opération puisque le signal d'erreur discret ternaire $\varepsilon_m$ a les valeurs +1, ou 1, ou bien 0. L' addition ou la soustraction est réalisée par le registre d'incrément 264, l'additionneur 263 et le circuit de sélection de polarité 262. A cette fin, le registre 264 mémorise une valeur binaire VADD sensiblement égale à ADD donnée par :

$$VADD = INT(ADD) = INT\ \left(\frac{\xi^2 + 1/4}{B_L.T}\right)$$

où INT désigne la fonction partie entière.

Le circuit de sélection de polarité 262 possède deux entrées reliées aux bornes de sortie BU et BD du circuit de comparaison de phase généralisée, et une sortie reliée à une entrée de décision ED de l'additionneur 263. Le circuit 262 applique à l'entrée de décision ED un signal représentatif de l'opération, addition ou soustraction, à réaliser par l'additionneur 263. L'opération consiste en une addition en réponse au signal $U_n^{CP}$ ou $U_n^{CF}$ transmis par la borne BU du circuit de comparaison 25, et consiste en une soustraction en réponse au signal $D_n^{CP}$ ou $D_n^{CF}$ transmis par la borne BD du circuit de compararaison de phase 25. Aucune addition ou soustraction n'est effectuée en l'absence de signaux impulsionnels $U_n^{CP}$, $D_n^{CP}$, $U_n^{CF}$, $D_n^{CF}$, c'est-à-dire lorsque le signal d'erreur discret $\varepsilon_m$ est égal à 0. Ainsi la valeur (VADD) est respectivement additionnée au ou soustraite du contenu du compteur-décompteur 261 en fonction de la polarité choisie par le circuit 262.

La multiplication par le coefficient multiplicateur MUL pour obtenir l'incrémentation de phase VIP est établie par le circuit de décalage de bus 265. Soit DIM la dimension du bus d'adressage BA$\phi$, c'est-à-dire le nombre de bits d'un mot d'adresse de lecture adressant la mémoire ROM 243 du déphaseur numérique 24. Le bus BA$\phi$ convoie des mots binaires qui sont représentatifs de phases de démodulation comprises dans l'intervalle [O,2$\pi$] afin de recouvrir l'ensemble des incrémentations de phases possibles pour établir la phase de démodulation à chaque instant t = mT. Chaque mot d'adresse dans le bus BA$\phi$ adresse des valeurs discrètes trigométriques [cos $\phi_m$, sin $\phi_m$] mémorisées dans la mémoire 243 pour des valeurs de $\phi_m$ discrètes appartenant à l'intervalle [0,2$\pi$]. Ainsi un mot d'adresse à DIM bits est tel que l'élément binaire de poids faible est représentatif d'un incrément de phase élémentaire

$$\phi = \frac{2\pi}{2^{DIM}}.$$

Afin de "normaliser" l'incrémentation de phase par rapport au coefficient multiplicateur MUL, ce qui est équivalent à diviser VIP par MUL et donc à décaler les bits de poids fort du mot VIP vers la droite ou la gauche en fonction du signe de VIP, le mot VIP doit alors être décalé en fonction non seulement de ADD mais également $2^{DIM}$, soit un décalage de bus qui est la valeur entière la plus proche du rapport :

$$2\pi/(2^{DIM-1}.MUL) .$$

On en déduit donc que le décalage de bus DEB est défini par l'égalité :

$$DEB = INT[Log_2 \ (\pi/(2^{DIM-1}.MUL))],$$

dans laquelle INT désigne la fonction "partie entière". La valeur d'incrémentation de phase VIP sortant du circuit de décalage de bus 265 est ainsi obtenu à chaque instant d'échantillonnage t=nT.

La phase de démodulation $\phi_{m+1}$ à l'instant t = (m + 1) T est obtenue par addition de la valeur d'incrémentation de phase VIP à la phase de démodulation $\phi_m$ à l'instant t = mT dans l'accumulateur 266. Ce dernier reçoit sur des premières entrées la valeur normalisée d'incrémentation de phase VIP et délivre une adresse de paire de valeurs trigonométriques discrètes [cos $\phi_m$, sin $\phi_m$]. Le bus BA$\phi$ portant l'adresse est rebouclé sur des secondes entrées de l'accumulateur 266. Les bits de poids faible dans la somme obtenue sont tronqués afin que les adresses aient un nombre de bits constant. L'accumulateur effectue ainsi une seconde intégration du signal d'erreur, analogue à celle réalisée dans l'oscillateur analogique VCO 17.

Il a été montré comment est "implantée numériquement" une boucle de phase compte tenu de l'équation discrète de fonctionnement de celle-ci et donc de sa réalisation sous forme de circuit numérique. Des analogies entre un tel circuit numérique et une boucle de phase analogique classique sont présentées ci-après. Comme déjà dit, l'addition numérique de signaux d'échantillon d'erreur réalisée par le compteur-décompteur 261 est l'image de l'intégration analogique effectuée par le filtre de boucle de phase 16 de la Fig.1 (1/$\tau_1$p); de même, l'incrémentation numérique réalisé par l'accumulateur 266 est l'image de l'intégration analogique effectuée par l'oscillateur commandé en tension 17 ($K_o$/p).

En référence aux Figs.6 et 11, des circuits et des liaisons représentées en traits discontinus courts n'ont pas été volontairement décrits jusqu'à présent. Ces circuits et liaisons constituent des moyens de gestion de procédure d'acquisition en fréquence.

En se référant à la Fig.11, les moyens de gestion de procédure d'acquisition comprennent un registre de sauvegarde 267, un circuit de détection de transition d'état 268, et un circuit logique 269. Un port d'entrée/sortie du registre de sauvegarde est relié au bus B1. Des entrées du circuit logique 269 sont reliées au bus de sortie du circuit de décalage de bus 265. Une sortie du circuit logique 269 et la sortie de signal de commande C1 du détecteur d'état 253 sont reliées à des entrées du circuit de détection de transition d'état 268. La sortie du circuit 268 dessert une entrée de chargement LOAD du compteur-décompteur 261, et une entrée de lecture/écriture R/W du registre de sauvegarde 267.

En référence à la Fig.12, l'établissement de la phase de démodulation $\phi_{n+1}$ par le circuit de traitement numérique 26 à l'instant t = (n+1)T est déduite de la phase de démodulation $\phi_n$ à l'instant t=nT par addition de la valeur d'incrémentation de phase VIP à l'instant t=(n+1)T. Ainsi pour un écart de fréquence $\Delta f$ fixe donné entre la fréquence de l'oscillateur local 21 et la fréquence des ondes porteuses en quadrature, le contenu du compteur-décompteur 261 est représentatif dudit écart de fréquence $\Delta f$ lorsque la boucle est accrochée. Le compteur-décompteur mémorise en effet la valeur d'incrémentation de phase aux paramètres de somme et de produit ADD et MUL près comme vu précédemment. Dans la plupart des applications, cet écart de fréquence Δf varie très lentement dans le temps et peut donc être considéré comme fixe durant le temps moyen nécessaire à une resynchronisation de la boucle suite à un décrochage.

Le registre de sauvegarde 267 est précisément mis en oeuvre pour réinitialiser le contenu du compteur-décompteur au début d'une phase d'acquisition en fréquence. Pour cela, le registre 267 sauvegarde périodiquement le contenu du compteur-décompteur 261 lorsque la boucle est accrochée. Lorsqu'un décrochage est détecté par le détecteur d'état 253, ce dernier applique le signal de commande transition d'état C1 au niveau logique "1" pour valider les sorties du comparateur de fréquence 252. Le signal C1 est également appliqué à l'entrée du circuit de détection de transition d'état 268 dont la sortie transite d'un état bas "0" à un état haut "1" et permet ainsi de réinitialiser le contenu du compteur-décompteur 261 avec le contenu du registre de sauvegarde 267. Ainsi la phase d'acquisition débute au voisinage proche de l'écart de fréquence Δf recherché, impliquant ainsi des délais d'acquisition considérablement réduits.

Des causes pertubatrices, telles que glissements de fréquence et bruits, ayant conduit à des décrochages indésirables de la boucle ne doivent pas être pris en compte lors des phases d'acquisition succédant auxdits décrochages indésirables. Le circuit logique 269 vise précisément à limiter l'écart de fréquence Δf autorisé autour de la fréquence du signal généré par l'oscillateur local 21. Pour cela, le circuit logique 269 reçoit à travers le bus de sortie du circuit de décalage de bus 265 une valeur normalisée d'incrémentation de phase et positionne sa sortie à l'état haut "1" lorsque cette valeur normalisée est supérieure à une deuxième valeur de seuil prédéterminée. Un signal de dépassement correspondant SD est appliqué par la sortie du circuit logique 269 à l'entrée du circuit de transition d'état 268 qui commande alors une mise à zéro du contenu du compteur-décompteur 261 afin de réinitialiser une procédure d'acquisition en fréquence.

## Revendications

1. Dispositif de démodulation cohérente recevant un signal modulé (SI) obtenu par modulation multisymbole de deux ondes porteuses de modulation en quadrature, ledit dispositif comprenant des moyens de démodulation (CD) fournissant au moyen d'un oscillateur local (21) des ondes porteuses de démodulation en quadrature pour démoduler le signal modulé (SI) en deux signaux composants analogiques démodulés (X*, Y*),

des moyens d'échantillonnage (23a, 23b) fonctionnant à fréquence d'horloge (1/T) des symboles du signal modulé pour convertir les deux signaux composants analogiques démodulés (X*, Y*) en deux signaux numériques entrants $(X_n^E, Y_n^E)$
des moyens numériques de déphasage (24) pour déphaser les signaux entrants par une phase de démodulation numérique ($\phi_n$) en deux signaux numériques sortants $(X_n^S, Y_n^S)$, et
des moyens numériques de comparaison généralisée (25) recevant les deux signaux numériques sortants $(X_n^S, Y_n^S)$ pour produire des impulsions de signal d'erreur, caractérisé en ce que l'oscillateur local (21) produit des ondes porteuses de démodulation ayant une fréquence libre appartenant à une plage d'incertitude fréquentielle des ondes porteuses de modulation et en ce que ledit dispositif de démodulation comprend des moyens de traitement numérique (26) pour calculer la phase de démodulation numérique ($\phi_n$) en fonction des impulsions de signal d'erreur afin de compenser a posteriori les différences de phase et de fréquence entre les ondes porteuses de modulation et les ondes porteuses de démodulation par déphasage des signaux entrants $(X_n^E, Y_n^E)$.

2. Dispositif conforme à la revendication 1, caractérisé en ce que les moyens numériques de déphasage (24) comprennent une mémoire (243) mémorisant des valeurs numériques de deux fonctions sinusoïdales en quadrature ($\cos\phi_n$, $\sin\phi_n$) pour plusieurs valeurs discrètes de la phase de démodulation ($\phi_n$), et des moyens numériques de multiplication et d'addition rythmés à ladite fréquence d'horloge (1/T) pour multiplier un couple d'échantillons des signaux entrants $(X_n^E, Y_n^E)$ par une matrice de rotation dont les paramètres sont lus dans ladite mémoire (243) en fonction d'une adresse de lecture représentative d'une valeur de la phase de démodulation ($\phi_n$) calculée par les moyens de traitement numérique (26) afin de produire un couple d'échantillons des signaux sortants $(X_n^S, Y_n^S)$.

3. Dispositif conforme à la revendication 1 ou 2, caractérisé en ce que les moyens numériques de comparaison généralisée (25) comprennent des moyens numériques de comparaison de phase (251) pour produire, à la fréquence d'horloge, des premières et secondes impulsions de signal d'erreur $(U_n^{CP}, D_n^{CP})$ respectivement en réponse à des différences de phase négatives et positives entre les ondes porteuses de démodulation et les ondes porteuses de modulation, des moyens numériques de comparaison de fréquence (252) pour produire, à la fréquence d'horloge, des troisièmes et quatrièmes impulsions de signal d'erreur $(U_n^{CF}, D_n^{CF})$ respectivement en réponse à des différences de fréquence positives et négatives entre les ondes porteuses de démodulation et les ondes porteuses de modulation, et des moyens de détection d'état (253,254) pour fournir une impulsion de détection en réponse à des amplitudes des signaux numériques sortants ($X_n^S, Y_n^S$) qui sont comprises dans des intervalles d'amplitude respectifs prédéterminés (zones interdites) pendant chaque période de fréquence d'horloge, afin de produire un signal de commande logique (C1) pour activer les moyens de comparaison de fréquence (252) et désactiver les moyens de comparaison de phase (251) lorsqu'un compte d'impulsions de détection cumulé pendant une période (MT) multiple de la période des symboles (T) est supérieur à un premier seuil prédéterminé, et pour désactiver les moyens de comparaison de fréquence et activer les moyens de comparaison de phase (251) lorsque ledit compte d'impulsions de détection cumulé pendant ladite période multiple (MT) est inférieur audit premier seuil.

4. Dispositif conforme à la revendication 3, caractérisé en ce que les moyens de détection d'état (253,254) comprennent un circuit (253a) pour produire une desdites impulsions de détection lorsque les amplitudes des signaux sortants ($X_n^S, Y_n^S$) sont comprises dans les intervalles prédéterminés respectifs pendant la période d'horloge, un compteur (253b) pour compter les impulsions de détection durant ladite période multiple (MT), un comparateur (253c) pour comparer le compte d'impulsions de détection cumulé dans le compteur audit premier seuil afin de produire un signal logique de commande (C1) dont les deux états sont représentatifs respectivement de comptes d'impulsions de détection supérieur et inférieur audit premier seuil prédéterminé, et des moyens de commutation pour commuter des sorties d'impulsions de signal d'erreur (U$_1$, D$_1$; U$_2$, D$_2$) des moyens de comparaison de phase et de fréquence (251,252) à des entrées des moyens de traitement numérique (26) en fonction des états du signal de commande (C1) respectivement.

5. Dispositif conforme à la revendication 4, caractérisé en ce que les moyens de traitement numérique (26) comprennent

un compteur-décompteur (261) ayant un contenu (W$_m$) incrémentable et décrémentable, ledit contenu étant incrémenté et décrémenté respectivement par les premières et secondes impulsions de signal d'erreur ($U_n^{CP}$, $D_n^{CP}$) produites par les moyens de comparaison généralisé (25) lorsque ledit compte d'impulsions de détection cumulé dans ledit compteur (253b) durant la période multiple (MT) est inférieur audit premier seuil, et ledit contenu étant également incrémenté et décrémenté respectivement par les troisièmes et quatrièmes impulsions de signal d'erreur ($U_n^{CF}, D_n^{CF}$) produites par les moyens de comparaison généralisée (25) lorsque ledit compte d'impulsions de détection cumulé dans ledit compteur durant ladite période multiple (MT) est supérieur audit premier seuil,
des moyens d'addition-soustraction (262, 263, 264) pour respectivement additionner le contenu du compteur-décompteur à un premier paramètre prédéterminé (VADD) en réponse à l'une desdites premières et troisièmes impulsions et pour soustraire le contenu du compteur-décompteur audit premier paramètre (VADD) en réponse à l'une des secondes et quatrièmes impulsions de manière à fournir un résultat d'addition-soustraction,
des moyens (265) pour multiplier ledit résultat d'addition-soustraction par un second paramètre prédéterminé (MUL) en un produit, et
des moyens (266) pour accumuler ledit produit à la fréquence d'horloge (1/T) afin de produire une phase de démodulation ($\phi_n$).

6. Dispositif conforme à la revendication 5, caractérisé en ce qu'il comprend des moyens (267, 268) pour sauvegarder périodiquement le contenu (W$_m$) du compteur-décompteur (261) lorsque ledit compte d'impulsions de détection cumulé dans ledit compteur (253b) durant la période multiple (MT) est inférieur audit premier seuil, et pour introduire le contenu sauvegardé dans le compteur-décompteur (261) lorsque ledit compte d'impulsions de détection cumulé durant la période multiple (MT) dans ledit compteur (253b) est supérieur audit premier seuil.

7. Dispositif conforme à l'une quelconque des revendications 5 ou 6, caractérisé en ce que le contenu du compteur-décompteur (261) est réinitialisé à zéro lorsque le produit fourni par les moyens pour multiplier (265) excède un second seuil prédéterminé.

**Patentansprüche**

1. Kohärente Demodulationsvorrichtung, empfangend ein moduliertes Signal (SI), das durch Mehrsymbolmodulation von zwei Trägerwellen mit um 90° phasenverschobener Modulation erhalten wird, wobei die Vorrichtung Demodulationsmittel (CD) umfaßt, die mittels eines Lokaloszillators (21) Trägerwellen mit um 90° phasenverschobener Demodulation liefern, um das modulierte Signal (SI) in zwei analoge demodulierte Signalkomponenten (X*, Y*) zu demodulieren,

Abtastmittel (23a, 23b), die bei Taktfrequenz (1/T) der Symbole des modulierten Signals arbeiten, um die beiden demodulierten analogen Signalkomponenten (X*, Y*) in zwei digitale Eingangssignale ($X_n^E, Y_n^E$) umzuwandeln,

digitale Phasenverschiebungsmittel (24), um die Eingangsingale um eine digitale Demodulationsphase ($\Phi_n$) in der Phase in zwei digitale Ausgangssignale ($X_n^S, Y_n^S$) zu verschieben, und

digitale Mittel zum verallgemeinerten Vergleich (25), die die beiden digitalen Ausgangsignale ($X_n^S, Y_n^S$) empfangen, um Fehlersignalimpulse zu erzeugen, dadurch gekennzeichnet, daß der Lokaloszillator (21) Demodulationsträgerwellen mit einer freien Frequenz erzeugt, die zu einem Frequenzunsicherheitsbereich der Modulationsträgerwellen gehört, und daß die Demodulationsvorrichtung

Mittel zur digitalen Verarbeitung (26) umfaßt, um die digitale Demodulationsphase ($\Phi_n$) abhängig von Fehlersignalimpulsen zu berechnen, um später die Phasen- und Frequenzdifferenzen zwischen den Modulationsträgerwellen und den Demodulationsträgerwellen durch Phasenverschiebung der Eingangssignale ($X_n^E, Y_n^E$) zu kompensieren.

2. Vorrichtung nach Anspruch 1, dadurch gekennzeichnet, daß die digitalen Phasenverschiebungsmittel (24) einen Speicher (243), der digitale Werte von zwei um 90° phasenverschobenen sinusförmigen Funktionen ($\cos\Phi_n$, $\sin\Phi_n$) für mehrere diskrete Werte der Demodulationsphase ($\Phi_n$) speichert, und digitale Multiplikations- und Additionsmittel umfaßt, die bei der Taktfrequenz (1/T) getaktet sind, um ein Abtastpaar der Eingangssignale ($X_n^E, Y_n^E$) mit einer Rotationsmatrix zu multiplizieren, deren Parameter im Speicher (243) abhängig von einer Leseadresse gelesen werden, die einen Wert der Demodulationsphase ($\Phi_n$) repräsentiert, der durch die Mittel zur digitalen Verarbeitung (26) berechnet worden ist, um ein Abtastpaar der Ausgangssignale ($X_n^S, Y_n^S$) zu erzeugen.

3. Vorrichtung nach Anspruch 1 oder 2, dadurch gekennzeichnet, daß die digitalen Mittel zum verallgemeinerten Vergleich (25) digitale Phasenvergleichsmittel (251) umfassen, um bei der Taktfrequenz erste und zweite Fehlersignalimpulse ($U_n^{CP}$, $D_n^{CP}$) jeweils in Reaktion auf negative und positive Phasendifferenzen zwischen den Demodulationsträgerwellen und den Modulationsträgerwellen zu erzeugen, digitale Frequenzvergleichsmittel (252), um bei der Taktfrequenz dritte und vierte Fehlersignalimpulse $U_n^{CF}$, $D_n^{CF}$ jeweils in Reaktion auf positive und negative Frequenzdifferenzen zwischen den Demodulationsträgerwellen und den Modulationsträgerwellen zu erzeugen, und Zustandserfassungsmittel (253, 254), um einen Detektionsimpuls in Reaktion auf Amplituden der digitalen Ausgangsignale ($X_n^S, Y_n^S$) zu liefern, die in den jeweiligen vorbestimmten Amplitudenintervallen enthalten sind (verbotene Zonen) während jeder Taktfrequenzperiode, um ein Logiksteuersignal (C1) zu erzeugen, um die Frequenzvergleichsmittel (252) zu aktivieren und die Phasenvergleichsmittel (251) zu deaktivieren, wenn eine kumulierte Zählung von Detektionsimpulsen während einer mehrfachen Periode (MT) der Periode der Symbole (T) größer als ein erster vorbestimmter Schwellwert ist, und um die Frequenzvergleichsmittel zu deaktivieren und die Phasenvergleichsmittel (251) zu aktivieren, wenn die kumulierte Detektionsimpulszählung während der Mehrfachperiode (MT) kleiner als der erste Schwellwert ist.

4. Vorrichtung nach Anspruch 3, dadurch gekennzeichnet, daß die Zustandserfassungmittel (253, 254) einen Kreis (253a) zum Erzeugen eines der Detektionsimpulse, wenn die Amplituden der Ausgangssignale ($X_n^S, Y_n^S$) in den jeweiligen vorbestimmten Intervallen während der Taktperiode enthalten sind, einen Zähler (253b) zum Zählen der Detektionsimpulse während der Mehrfachperiode (MT), einen Komparator (253c) zum Vergleichen der kumulierten Detektionsimpulszählung im Zähler mit dem ersten Schwellwert, um ein Steuerlogiksignal (C1) zu erzeugen, dessen beide Zustände jeweils für Detektionsimpulszählungen höher und niedriger als der vorbestimmte erste Schwellwert repräsentativ sind, und Umschaltmittel, um Fehlersignalausgangsimpulse ($U_1, D_1; U_2, D_2$) der Phasen- und Frequenzvergleichsmittel (251, 252) mit Eingängen der Mittel zur digitalen Verarbeitung (26) jeweils abhängig von Zuständen des Steuersignals (C1) zu kommutieren.

5. Vorrichtung nach Anspruch 4, dadurch gekennzeichnet, daß die Mittel zur digitalen Verarbeitung (26) umfassen

einen Aufwärts- und Abwärtszähler (261), der einen inkrementierbaren und dekrementierbaren Inhalt ($W_m$) aufweist, wobei der Inhalt jeweils durch die ersten und zweiten Fehlersignalimpulse ($U_n^{CP}$, $D_n^{CP}$) inkrementiert und dekrementiert wird, die durch die Mittel zum verallgemeinerten Vergleich (25) erzeugt werden, wenn die kumulierte Detektionsimpulszählung im Zähler (253b) während der Mehrfachperiode (MT) kleiner als der erste Schwellwert ist, und wobei der Inhalt ebenso jeweils durch die dritten und vierten Fehlersignalimpulse ($U_n^{CF}$, $D_n^{CF}$) jeweils inkrementiert und dekrementiert wird, die durch die Mittel zum verallgemeinerten Vergleich (25) erzeugt werden, wenn die im Zähler kumulierte Detektionsimpulszählung während der Mehrfachperiode (MT) größer als der erste Schwellwert ist,

Additions-Subtraktionsmittel (262, 263, 264), um jeweils den Inhalt des Aufwärts- und Abwärtszählers zu einem ersten vorbestimmten Parameter (VADD) in Reaktion auf einen der ersten und dritten Impulse zu addieren und um den Inhalt des Aufwärts-und Abwärtszählers von dem ersten Parameter (VADD) in Reaktion auf einen der zweiten und vierten Impulse zu subtrahieren derart, daß ein Additions-Subtraktionsresultat geliefert wird,

Mittel (265) zum Multiplizieren des Additions-Subtraktionsergebnisses mit einem zweiten vorbestimmten Parameter (MUL) zu einem Produkt und

Mittel (266) zum Akkumulieren des Produktes bei der Taktfrequenz (1/T), um eine Demodulationsphase ($\Phi_n$) zu erzeugen.

6. Vorrichtung nach Anspruch 5, dadurch gekennzeichnet, daß sie Mittel (267, 268) zum periodischen Sichern des Inhalts ($W_m$) des Aufwärts- und Abwärtszählers (261) umfaßt, wenn die im Zähler (253b) während der Mehrfachperiode (MT) kumulierte Detektionsimpulszählung kleiner als der erste Schwellwert ist, und um den gesicherten Inhalt im Aufwärts- und Abwärtszähler (261) einzugeben, wenn die im Zähler (253b) während der Mehrfachperiode (MT) kumulierte Detektionsimpulszählung größer als der erste Schwellwert ist.

7. Vorrichtung nach einem beliebigen der Ansprüche 5 oder 6, dadurch gekennzeichnet, daß der Inhalt des Aufwärts- und Abwärtszählers (261) auf null reinitialisiert wird, wenn das durch die Mittel zum Multiplizieren (265) gelieferte Produkt einen zweiten vorbestimmten Schwellwert überschreitet.

## Claims

1. Coherent demodulating device receiving a modulated signal (SI) obtained by multi-symbol modulation of two quadrature modulation carrier waves, said device comprising demodulating means (CD) supplying by means of a local oscillator (21) quadrature demodulation carrier waves for demodulating the modulated signal (SI) into two demodulated analog component signals (X*, Y*),

sampling means (23a, 23b) operating at clock frequency (1/T) of the symbols of the modulated signal for converting the two demodulated analog component signals (X*, Y*) into two incoming digital signals ($X_n^E$, $Y_n^E$), digital phase shifting means (24) for phase shifting the incoming signals by a digital demodulation phase ($\phi_n$) into two outgoing digital signals ($X_n^S$, $Y_n^S$), and
digital generalized comparing means (25) receiving the two outgoing digital signals ($X_n^S$, $Y_n^S$) for producing error signal pulses,

characterized in that the local oscillator (21) produces demodulation carrier waves having a free frequency belonging to a frequential uncertainty range of the modulation carrier waves, and in that said demodulating device comprises
digital processing means (26) for calculating the digital demodulation phase ($\phi_n$) as a function of the error signal pulses so as to a posteriori compensate the phase and frequency differences between the modulation carrier waves and the demodulation carrier waves by phase shifting the incoming signals ($X_n^E$, $Y_n^E$).

2. Device according to claim 1, characterized in that the digital phase shifting means (24) comprise a memory (243) storing digital values of two quadrature sinewave functions ($\cos\phi_n$, $\sin\phi_n$) for several discrete values of the demodulation phase ($\phi_n$), and digital multiplying and adding means clocked at said clock frequency (1/T) for multiplying a couple of samples of the incoming signals ($X_n^E$, $Y_n^E$) by a rotation matrix whose parameters are read in said memory (243) as a function of a read address representative of a value of the demodulation phase ($\phi_n$) calculated by the digital processing means (26) thereby supplying a couple of samples of the outgoing signals ($X_n^S$, $Y_n^S$).

3. Device according to claim 1 or 2, characterized in that the digital generalized comparing means (25) comprise digital phase comparing means (251) for producing, at the clock frequency, first and second error signal pulses ($U_n^{CP}$, $D_n^{CP}$) respectively in response to negative and positive phase differences between the demodulation carrier waves and the modulation carrier waves, digital frequency comparing means (252) for producing, at the clock frequency, third and fourth error signal pulses ($U_n^{CF}$, $D_n^{CF}$) respectively in response to positive and negative frequency differences between the demodulation carrier waves and the modulation carrier waves, and state detecting means (253,254) for supplying a detection pulse in response to amplitudes of the outgoing digital signals ($X_n^S$, $Y_n^S$) which lie in respective predetermined amplitude intervals (forbidden zones) during each period of clock frequency, thereby deriving a logic control signal (C1) to activate the frequency comparing means (252) and deactivate the phase comparing means (251) when a count of detection pulses cumulated during a period (MT) multiple of the symbol period (T) is greater than a first predetermined threshold, and to deactivate the frequency comparing means and activate the phase comparing means (251) when said count of detection pulses cumulated during said multiple period (MT) is less than said first threshold.

4. Device according to claim 3, characterized in that the state detecting means (253,254) comprise a circuit (253a) for producing one of said detection pulses when the amplitudes of the outgoing signals ($X_n^S$, $Y_n^S$) lie in the respective predetermined intervals during the clock period, a counter (253b) for counting the detection pulses during said multiple period (MT), a comparator (253c) for comparing the cumulated detection pulse count in the counter at said first threshold thereby deriving a logic control signal (CI) whose two states are respectively representive of detection pulse counts greater than and less than said first predetermined threshold, and switching means for switching error signal pulse outgoings ($U_1$, $D_1$ ; $U_2$, $D_2$) from the phase and frequency comparing means (251,252) to inputs in the digital processing means (26) as a function of the states of the control signal (C1) respectively.

5. Device according to claim 4, characterized in that the digital processing means (26) comprise

an up-down counter (261) having an incrementable and decrementable content ($W_m$), said content being incremented and decremented respectively by the first and second error signal pulses ($U_n^{CP}$, $D_n^{CP}$) produced by the generalized comparing means (25) when said detection pulse count cumulated in said counter (253b) during the multiple period (MT) is less than said first threshold, and said content being also incremented and decremented respectively by the third and fourth error signal pulses ($U_n^{CF}$, $D_n^{CF}$) produced by the generalized comparing means (25) when said detection pulse count cumulated in said counter during said multiple period (MT) is greater than said first threshold,
adding-subtracting means (262, 263, 264) for respectively adding the content of the up-down counter to a first predetermined parameter (VADD) in response to one of said first and third pulses and for subtracting the content of the up-down counter from said first parameter (VADD) in response to one of the second and fourth pulses thereby providing an addition-subtraction result,
means (265) for multiplying said addition-subtraction result by a second predetermined parameter (MUL) into a product, and
means (266) for accumulating said product at the clock frequency (1/T) thereby supplying a demodulation phase ($\phi_n$).

6. Device according to claim 5, characterized in that it comprises means (267,268) for periodically saving the content ($W_m$) of the up-down counter (261) when said detection pulse count cumulated in said counter (253b) during the multiple period (MT) is less than said first threshold, and for introducing the saved content into the up-down counter (261) when said detection pulse count cumulated in said counter (253b) during the multiple period (MT) is greater than said first threshold.

7. Device according to any one of claims 5 or 6, characterized in that the content of the up-down counter (261) is reset to zero when the product supplied by the multiplying means (265) exceeds a second predetermined threshold.

# *FIG.1A*

(TECHNIQUE ANTERIEURE)

# *FIG.1B*

## FIG.2

vers circuit
de décodage

## FIG.3

# *FIG.4*

# *FIG.5*

# FIG.6

CIRCUIT DE
COMPARAISON DE PHASE
GENERALISEE 25

BS1  $X_n^S$  251  $U_1$  $U_n^{CP}$

de 24

COMPARATEUR
DE PHASE
(FIG.7)

$Y_n^S$

BS2

$D_n^{CP}$

$D_1$

254

BU

DETECTEUR
D'ETAT
(FIG.9)

C1

CIRCUIT
DE
COMMUTATION

vers 26

253

BD

$D_2$

$D_n^{CF}$

COMPARATEUR
DE
FREQUENCE
(FIG.8)

252

$U_2$

$U_n^{CF}$

vers 268

# FIG.7

COMPARATEUR
DE PHASE 251

BS1  $X_n^S$  251 a  251 b  $U_1$  $U_n^{CP}$

de 24

CIRCUIT DE
CALCUL
D'ERREUR
DE PHASE

$\varepsilon_n^{CP}$

CIRCUIT DE
MISE EN
FORME

vers 254

$Y_n^S$

$D_n^{CP}$

BS2

$D_1$

## FIG.8

COMPARATEUR DE
FREQUENCE 252

## FIG.9

DETECTEUR
D'ETAT 253

## *FIG.10*

MODULATION MAQ 16

## *FIG.12*

# FIG.11

vers 24

BA Φ

DIM

ACCUMULATEUR — 266

DIM

VIP

REGISTRE VADD — 264

B2

REGISTRE DE SAUVEGARDE — 267

R/$\overline{W}$

B1

263

BS

CIRCUIT DE DECALAGE DE BUS — 265

ED

VADD $\varepsilon_m + W_m$

261

LOAD    $W_m$

COMPTEUR-DECOMPTEUR

UP        DOWN

269 — CIRCUIT LOGIQUE

268

CIRCUIT DE DETECTION DE TRANSITION D'ETAT

−     +

CIRCUIT DE SELECTION DE POLARITE — 262

SD

C1

$U_n^{CP}, U_n^{CF}$

$D_n^{CP}, D_n^{CF}$

de 253

BU

BD

CIRCUIT DE TRAITEMENT NUMERIQUE DE BOUCLE DE PHASE 26

de 25